# EUROPÄISCHE PATENTSCHRIFT

(11) **EP 1 738 895 B1**
(45) Veröffentlichungstag und Bekanntmachung des Hinweises auf die Patenterteilung: **18.07.2012**
(21) Anmeldenummer: 05014009.4
(22) Anmeldetag: 29.06.2005
(51) Int. Cl.: B32B 5/28, E05D 1/02

(54) **Gelenk**
Joint
Joint

(43) Veröffentlichungstag der Anmeldung: 03.01.2007
(73) Patentinhaber: SGL Carbon SE, 65203 Wiesbaden (DE)
(72) Erfinder: Priegelmeir, Walter, 86663 Bäumenheim (DE); Heilmeier, Gerhard, 80639 München (DE)

(56) Entgegenhaltungen:
- EP-A- 0 875 647
- EP-A- 0 939 029
- EP-A- 1 085 152
- DE-A1- 1 475 532
- DE-A1- 19 955 007
- US-A- 5 463 794
- US-A- 5 945 053
- PATENT ABSTRACTS OF JAPAN Bd. 1998, Nr. 14, 31. Dezember 1998 (1998-12-31) & JP 10 252018 A (MITSUBISHI CHEM CORP), 22. September 1998 (1998-09-22)

## Beschreibung

Die vorliegende Erfindung betrifft ein Gelenk (Schamier).

Aus der Patentschrift DE 197 18 671 C1 ist ein Gelenk für Anwendungen in der Raumfahrt bekannt. Dieses Gelenk wird gebildet durch einen Streifen eines ausgehärteten verbundwerkstoffs, der aus zwei miteinander verbundenen faserverstärkten Materialien besteht, wobei eines dieser Materialien eine geradlinig verlaufende Trennfuge, beispielsweise mit U- oder V-förmigem Querschnitt aufweist und das andere Material im Bereich der Trennfuge geknickt wird. Für die knickbare Schicht geeignet sind Fasermaterialien mit hoher Bruchdehnung wie z.B. mit Aramid-, Polyethylen-, Polyamid- oder Polyesterfasern verstärkter Kunststoff. Die mit der Trennfuge versehene Schicht besteht aus mit Carbon-, Glas-, Keramik- oder Borfasem verstärktem Kunststoff.
Bei der Fertigung dieses Gelenks wird auf einer prismatischen Vorrichtung ein mehrlagiger Aufbau aus Fasergeweben hergestellt und mit Standardverfahren ausgehärtet. Die Dicken der einzelnen Lagen sowie der Lagenaufbau richten sich nach dem Einsatzzweck. Die erste Lage besteht dabei vorzugsweise aus Aramid oder ähnlichen Fasern, die Folgelage(n) aus carbonfaserverstärktem Kunststoff (CFK).
Im nächsten Schritt wird die Kante durch Abschleifen gebrochen. Dabei wird die CFK-Schicht solange abgeschliffen, bis unter dem schwarzen CFK-Laminat ein schmaler Streifen der gelben Aramidfaser zum Vorschein kommt, Diese Vorgehensweise erlaubt eine sehr gute Kontrolle der Menge des zu entfernenden Materials und stellt den eigentlichen Grund dar, die Fertigung in bereits abgewinkelter Konfiguration zu beginnen. Das Bauteil wird dann entformt und aufgekniekt, wodurch die in der Aramidlage noch enthaltene Harzmenge entlang des Knicks abplatzt, ohne dass die Fasern brechen.
Besondere Vorteile dieser Gelenke sind der einfache Aufbau, der wenig aufwändige Fertigungsprozess und das geringe Gewicht.
Derartige Gelenke sind aber nur für eine begrenzte Anzahl von Drehvorgängen während ihrer Lebensdauer vorgesehen. Für viele Anwendungsfälle in der Raumfahrt ist sogar ein nur einmaliger Drehvorgang des Gelenks erforderlich, z.B. beim Ausklappen von Solargeneratoren oder flachen Antennen oder bei der Entfaltung von Antennenschalen.

Die Eignung dieser Art von Gelenken für eine nur begrenzte Anzahl von Dreh- bzw. Klappvorgängen ist ein entscheidender Nachteil, denn dadurch verbietet sich ihr Einsatz in Vortichtungen, in denen ein Gelenk einer häufigen Beanspruchung unterliegt, d.h, eine große Anzahl von Dreh- oder Klappvorgängen zuverlässig bewältigt werden muss, beispielsweise in medizintechnischen Vorrichtungen.
Der Aufbau des Gelenks gemäß DE 197 18 671 C1 ist insofern unzweckmäßig, als dass die Oberfläche der Aramidfaserschicht frei liegt. Dadurch ist diese für die Funktion des Gelenks unabdingbare Schicht unmittelbar den verschiedensten Verschleißeinwirkungen ausgesetzt.

Die Aufgabe der vorliegenden Erfindung besteht darin, ein Gelenk bereitzustellen, das einer großen Anzahl von Belastungszyklen zuverlässig standhält.
Das Gelenk soll insbesondere für den Einsatz in röntgerimedizinischen und -technischen Anwendungen geeignet sein. Bei der Werkstoffauswahl für diesen Anwendungsbereich des erfindungsgemäßen Gelenks ist zu berücksichtigen, dass das Gelenk für Röntgenstrahlung ohne störende Bildung von Artefakten durchstrahlbar sein muss.

Die Aufgabe wird gelöst durch ein Gelenk, in welchem sich eine Schicht aus einem flexiblen knickbaren faserverstärktem Verbundwerkstoff zwischen zwei Schichten aus einem faserverstärkten Verbundwerkstoff von hoher Festigkeit und Steifigkeit befindet. Diese steifen äußeren Schichten sind an der Knicklinie (d.h, an der Drehachse der Klappbewegung) jeweils mit einer Trennfuge versehen. Das erfindungsgemäße Gelenk enthält also eine zwischen zwei entlang der Knicklinie jeweils mit einer Trennfuge versehenen Schichten aus einem faserverstärktem Verbundwerkstoff von hoher Steifigkeit eingebettete Schicht aus einem knickbaren faserverstärkten Verbundwerkstoff, die bei Betätigung des Gelenks entlang der Trennfugen geknickt wird.

Im Gegensatz zum Stand der Technik entsprechend DE 197 18 671 C1 befindet sich in dem erfindungsgemäßen Gelenk das für seine Funktion unerlässliche knickbare Material im Inneren des Gelenks zwischen zwei aus einem Werkstoff hoher Festigkeit bestehenden Schichten. Nur unmittelbar am Grund der Trennfugen ist die Oberfläche des knickbaren Materials freigelegt. Auf diese Weise ist das knickbare Material im erfindungsgemäßen Gelenk weitgehend vor äußeren Verschleißeinwirkungen geschützt.

Weitere Details, Ausführungsformen und vorteilhafte Wirkungen der Erfindung gehen aus der folgenden ausführlichen Beschreibung und der Figur hervor.

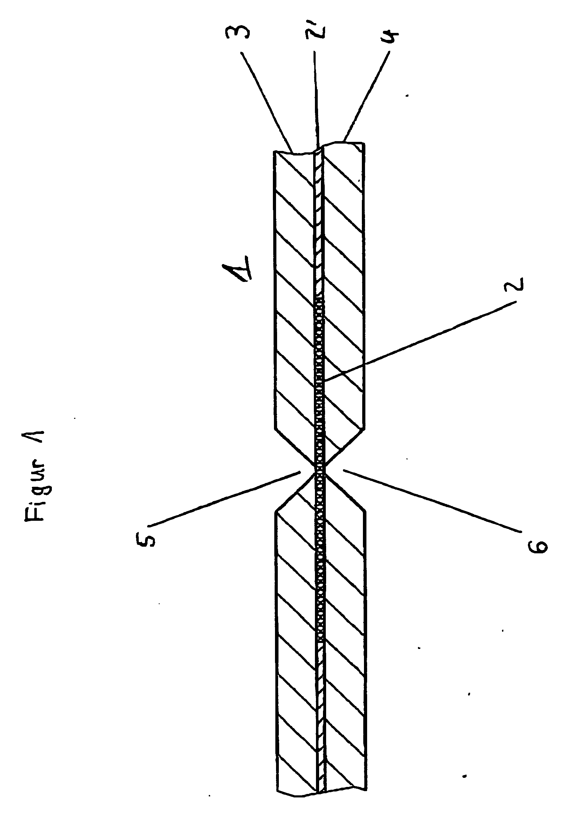

Die Figur 1 zeigt eine Schnittdarstellung einer bevorzugten Ausführungsform des erfindungsgemäßen Gelenks.

Die Imickbare innere Schicht 2 aus faserverstärktem Verbundwerkstoff enthält ein Gewebe oder ein anderes flächiges textiles Gebilde aus Fasern mit hoher Bruchdehnung, vorzugsweise Aramidfasern. Die Matrix des Verbundwerkstoffs wird durch Polyurethanharz gebildet, mit dem das Gewebe imprägniert ist.
Anstelle der Aramidfasern können andere Fasern mit hoher Bruchdehnung eingesetzt werden.

Die Schichten 3 und 4 werden beispielsweise aus carbornfaserverstärktem Kunststoff CFK gebildet. Diese Schichten enthalten Gewebe oder andere flächige textile Gebilde aus Carbonfasem. Die Matrix des CFK wird durch Epoxidharz gebildet, mit dem das Carbonfasergewebe imprägniert ist.
CFK ist aufgrund seiner hohen Röntgentransparenz für die Anwendung des erfindungsgemäßen Gelenks in röntgentechnischen Vonichtungen der bevorzugte Werkstoff. Die geringe Absorption von Röntgenstrahlung durch CFK ermöglicht bei gleichbleibender diagnostischer Qualität das Arbeiten mit einer niedrigen RöntgenintensitäL Durch die guten mechanischen Eigenschaften des CFK kommt man gegenüber den bisher eingesetzten Werkstoffen mit geringeren Bauteildicken aus.
Im folgenden wird die Erfindung beispielhaft für Gelenke aus dem bevorzugten Werkstoff CFK beschrieben. Je nach Anwendungsfall kann anstelle von CFK aber auch mit Glas- oder Keramikfasern verstärkter Verbundwerkstoff zum Einsatz kommen.

Die Verstärkungsfasern in der Schicht 2 oder/und in den Schichten 3 und 4 können beispielsweise in Form von Geweben, Gelegen, insbesondere unidirektionale Gelegen (UD-Gelegen), oder Bändern vorliegen.

Wird für die knickbare Schicht 2 ein durch ein Gewebe verstärkter Werkstoff verwendet, so wird dieser Werkstoff in der Schicht 2 bevorzugt so angeordnet, dass die sich kreuzenden Kett- und Schussfäden des Gewebes im Winkel von + und -45° zu den Trennfugen verlaufen. Dadurch wird eine gleichmäßige Verteilung der Belastung auf die Kett- und die Schussfäden erreicht.

Wenn die knickbare Schicht 2 durch ein UD-Gelege verstärkt ist, so wird das Material in der Schicht 2 bevorzugt so angeordnet, dass die Faserstränge senkrecht zur Trennfuge Verlaufen, um eine belastungsgerechte Verstärkung zu gewährleisten.

Die Trennfugen 5, 6 in den Schichten 3 und 4 sind als Nuten mit V-förmigem oder U-förmigem Querschnitt ausgebildet. Trennfugen mit V-förmigem Querschnitt werden bevorzugt, weil hier die freigelegte Oberfläche des Materials 2 minimal ist (idealerweise nur entlang der Linie, an der die Nutflanken zusammentreffen).

Figur 1 zeigt schematisch den Aufbau einer bevorzugten Ausführungsform des erfindungsgemäßen Gelenks 1. Der Einsatz des flexiblen Materials ist auf die unmittelbare Umgebung der Knicklinie beschränkt. Diese Ausführungsform des Gelenks 1 umfasst eine erste und eine zweite äußere Schicht 3, 4 aus einem faserverstärkten Verbundwerkstoff von hoher Festigkeit und Steifigkeit, z.B. CFK, jeweils mit einer Trennfuge 5, 6 entlang der Knicklinie, und eine ebenfalls aus einem faserverstärkten Verbundwerkstoff von hoher Festigkeit und Steifigkeit, z.B. CFK, ausgebildete Zwischenschicht 2' zwischen den äußeren CFK-Schichten 3, 4. Die Zwischenschicht 2' ist entlang der Knicklinie unterbrochen, und im Bereich dieser Unterbrechung ist ein knickbarer Streifen 2, beispielsweise aus einem Aramidfaserlaminat eingebettet. Der Streifen erstreckt sich vorzugsweise jeweils auf ungefähr 15 bis 20 mm nach beiden Seiten von der Knicklinie. Oberhalb und unterhalb des knickbaren Streifens 2 befinden sich die Trennfugen 5 und 6, entlang derer bei Betätigung des Gelenks der knickbare Streifen 2 geknickt wird.

Bei der Herstellung des in Figur 1 dargestellten Gelenks wird zunächst der Streifen 2 gefertigt, indem ein Laminat der gewünschten Stärke durch Übereinanderlegen mehrerer Lagen aus Aramidfasermaterial geformt wird. Jede neu aufgelegte Aramidfaserlage wird mit dem matriobildenden Polyurethanharz bestrichen. Anschließend wird der Stapel verpresst und aus dem so hergestellten Laminat werden Streifen mit den gewünschten Abmessungen geschnitten. Wenn das knickbare Material 2 beispielsweise nach beiden Seiten der Knicklinie eine Ausdehnung von 15 bis 20 mm aufweisen soll, sind also Streifen mit einer Breite von 30 bis 40 mm nötig.
Der Streifen 2 wird auf den in bekannter Weise durch Übereinanderlegen von CFK-Prepregs hergestellten Vorläufer der ersten CFK-Schicht 3 aufgelegt. Zu beiden Seiten des Streifens 2 werden durch Übereinanderlegen einer entsprechenden Anzahl weiterer Lagen CFK-Prepreg Vorläufer für die CFK-Schicht 2' gebildet, deren Stärke der des Streifens 2 im Gelenk entspricht. Die Kanten der Schichten 2 und 2' stoßen unmittelbar aneinander. Darüber werden die für die Bildung der CFK-Schicht 4 benötigten Lagen CFK-Prepreg gelegt.
Der so erhaltene Schichtaufbau wird anschließend in bekannter Weise ausgehättet, beispielsweise unter Druck in einer Presse. Im ausgehärteten Zustand werden die Schichten 3 und 4 durch mechanische Bearbeitung mit den Trennfugen 5, 6 versehen.

Die Haftung zwischen der mit Aramidfasern verstärkten Schicht 2 und der CFK-Schicht 3 bzw. 4 wird verbessert, wenn die Oberflächen der mit Aramidfasern verstärkten Schicht aufgerauht sind. Dies lässt sich erreichen, indem der Stapel Aramidfaserlagen zwischen zwei Lagen aus sogenanntem peel ply laminiert wird. Entsprechende Materialien sind dem Fachmann bekannt. Die peel plies werden unmittelbar vor dem Auflegen des Aramidstreifens auf die CFK-Schicht 3 bzw. unmittelbar vor dem Auflegen der CFK-Schicht 4 vom Aramidstreifen 2 abgezogen und hinterlassen dort eine aufgerauhte Oberfläche.

Belastungstests haben gezeigt, dass mit den erfindungsgemäßen Gelenken über 50,000 Klappzyklen zuverlässig ohne Verschleißerscheinungen ausgeführt werden können.

Das erbndungsgemäße Gelenk kann beispielsweise zur Positionierung einer Schädelschale für Röntgenaufnahmen benutzt werden. Durch Knicken des Gelenks entlang der Trennfugen wird die Schädelschale, die ihrerseits mit einem Abstützungsmechanismus versehen ist, aus der waagerechten Position um den gewünschten Winkel nach oben oder nach unten geklappt, beispielsweise +/- 15°. Tests mit Prototypen zeigten, dass die Röntgentransparenz des erfindungsgemäßen Gelenks ausreichend ist, so dass die Qualität der Aufnahmen nicht beeinträchtigt wird.

## Patentansprüche

1. Gelenk (1), umfassend
eine erste und eine zweite äußere Schicht (3, 4) aus einem faserverstärkten Verbundwerkstoff von hoher Festigkeit und Steifigkeit, jeweils mit einer Trennfuge (5, 6) entlang der Knicklinie,
eine Zwischenschicht (2') aus einem faserverstärkten Verbundwerkstoff von hoher Festigkeit und Steifigkeit, die im Bereich der Knicklinie unterbrochen ist, mit einem im Bereich dieser Unterbrechung eingebetten Streifen (2) aus einem knickbaren faserverstärkten Kunststoff mit einer Ausdehnung nach beiden Seiten der Knicklinie, der bei Betätigung des Gelenks entlang dieser Trennfugen geknickt wird, wobei die Verstärkungsfasern des knickbaren Verbundwerkstoffs Aramidfasern sind und die Matrix Polyurethanharz und wobei die Oberflächen der mit Aramidfasern verstärktten Schicht (2) aufgerauht sind, sowie das Gelenk für Röntgenstrahlung ohne störende Bildung von Artefakten durchstrahlbar ist.

2. Gelenk nach Anspruch 1, **dadurch gekennzeichnet, dass** der Verbundwerkstoff hoher Steifigkeit und Festigkeit ein carbonfaserverstärkter Kunststoff (CFK) ist mit einer Matrix aus Epoxidharz.

3. Gelenk nach einem der vorhergehenden Ansprüche, **dadurch gekennzeichnet, dass** die Verstärkungsfasern in den Verbundwerkstoffen (2, 2', 3, 4) in Form von Geweben, Bädern, Gelegen oder unidirektionalen Gelegen vorliegen.

4. Gelenk nach einem der vorhergehenden Ansprüche, **dadurch gekennzeichnet, dass** der knickbare Verbundwerkstoff (2) durch ein Gewebe verstärkt ist und im Gelenk so angeordnet ist, dass die sich kreuzenden Kett- und Schussfäden des Gewebes im Winkel von + und -45° zu den Trennfugen (5, 6) verlaufen.

5. Gelenk nach einem der vorhergehenden Ansprüche, **dadurch gekennzeichnet, dass** der knickbare Verbundwerkstoff (2) durch ein unidirektionales Gelege verstärkt ist und im Gelenk so angeordnet ist, dass die Faserstränge des Geleges senkrecht zu den Trennfugen (5, 6) verlaufen.

6. Gelenk nach einem der vorhergehenden Ansprüche, **dadurch gekennzeichnet, dass** die Trennfugen (5, 6) einen V- oder U-förmigen Querschnitt haben.

7. Verwendung des Gelenks nach Anspruch 5 in röntgenmedizinischen oder -technischen Vorrichtungen.

## Claims

1. Hinge (1) comprising
first and second outer layers (3, 4) of a fiber reinforced composite material of high strength and stiffness each having a separating groove (5, 6) along the line of inflection,
an interlayer (2') of a fiber reinforced composite material of high strength and stiffness that is interrupted in the region of the line of inflection and comprises a strip (2), embedded in the region of this interruption, of an inflectable fiber reinforced plastic having an extension to either side of the line of inflection and inflected along these separating grooves when the hinge is actuated, the reinforcing fibers of the inflectable composite material being aramid fibers and the matrix being polyurethane resin, and the surfaces of the aramid fiber reinforced layer (2) being roughened, and the hinge being transparent to X-rays without troublesome formation of artifacts.

2. Hinge according to Claim 1, **characterized in that** the composite material of high stiffness and strength is a carbon fiber reinforced plastic (CRP) comprising a matrix of epoxy resin.

3. Hinge according to any one of the preceding claims, **characterized in that** the reinforcing fibers are present in the composite materials (2, 2', 3, 4) in the form of wovens, ligaments, laids or unidirectional laids.

4. Hinge according to any one of the preceding claims, **characterized in that** the inflectable composite material (2) is reinforced by a woven fabric and is disposed in the hinge such that the crossing warp and fill threads of the woven fabric extend at + and -45° to the separating grooves (5, 6).

5. Hinge according to any one of the preceding claims, **characterized in that** the inflectable composite material (2) is reinforced by a unidirectional laid and is disposed in the hinge such that the fibrous strands of the laid extend perpendicularly to the separating grooves (5, 6).

6. Hinge according to any one of the preceding claims, **characterized in that** the separating grooves (5, 6) have a V or U shaped cross section.

7. The use of the hinge according to Claim 5 in medical or technical X-ray devices.

## Revendications

1. Charnière (1), comprenant
une première et une seconde couche extérieure (3, 4) en un matériau composite renforcé par des fibres de solidité et rigidité élevées, comprenant chacune une fente (5, 6) le long de la ligne de pli,
une couche intermédiaire (2') en un matériau composite renforcé par des fibres de solidité et rigidité élevées, qui est interrompue dans la zone de la ligne de pli, comprenant dans la zone de cette interruption une bande intégrée (2) en un plastique renforcé par des fibres pliable qui s'étend des deux côtés de la ligne de pli, qui est pliée le long de ces fentes lors de l'actionnement de la charnière, les fibres renforçantes du matériau composite pliable étant des fibres d'aramide et la matrice étant une résine de polyuréthane, et les surfaces de la couche (2) renforcée avec des fibres d'aramide étant rugosifiées, et la charnière pouvant être exposée à un rayonnement de rayons X sans formation dérangeante d'artéfacts.

2. Charnière selon la revendication 1, **caractérisée en ce que** le matériau composite de rigidité et solidité élevées est un plastique renforcé par des fibres de carbone (CFK) comprenant une matrice en résine d'époxyde.

3. Charnière selon l'une quelconque des revendications précédentes, **caractérisée en ce que** les fibres renforçantes dans les matériaux composites (2, 2', 1 3, 4) se présentent sous la forme de tissus, de bandes, de mats ou de mats unidirectionnels.

4. Charnière selon l'une quelconque des revendications précédentes, **caractérisée en ce que** le matériau composite pliable (2) est renforcé par un tissu et agencé dans la charnière de manière à ce que les fils de chaîne et de trame qui se croisent du tissu passent à un angle de + et -45° par rapport aux fentes (5, 6).

5. Charnière selon l'une quelconque des revendications précédentes, **caractérisée en ce que** le matériau composite pliable (2) est renforcé par un mat unidirectionnel et agencé dans la charnière de manière à ce que les stratifils du mat soient perpendiculaires aux fentes (5, 6).

6. Charnière selon l'une quelconque des revendications précédentes, **caractérisée en ce que** les fentes (5, 6) ont une section en forme de V ou de U.

7. Utilisation de la charnière selon la revendication 5 dans des appareils médicaux ou techniques à rayons X.
